# FASCICULE DE BREVET EUROPEEN

(11) **EP 0 961 227 B1**
(45) Date de publication et mention de la délivrance du brevet: **30.07.2003**
(21) Numéro de dépôt: 99401252.4
(22) Date de dépôt: 25.05.1999
(51) Int. Cl.: G06T 7/00

(54) **Procédé de détection de la profondeur relative entre deux objects dans une scène à partir d'un couple d'images issues de prises de vues différentes**
Verfahren zum Detektieren der relativen Tiefe zweier Objekte in einer Szene ausgehend von zwei Aufnahmen aus verschiedenen Blickrichtungen
Method of detecting the relative depth between two objects in a scene from a pair of images taken at different views

(30) Priorité: 27.05.1998 FR 9806685
(43) Date de publication de la demande: 01.12.1999
(73) Titulaire: FRANCE TELECOM, 75015 Paris (FR)
(72) Inventeur: Avaro, Olivier, 94230 Cachan (FR); Bergen, Lothar, 94230 Cachan (FR); Meyer, Fernand, 94230 Cachan (FR)
(74) Mandataire: Ballot, Paul

(56) Documents cités:
- BERGEN L ET AL: "Motion segmentation and depth ordering based on morphological segmentation" PROC. OF ECCV'98, 5TH EUROPEAN CONF. ON COMPUTER VISION, FREIBURG, GERMANY, 2-6 JUNE 1998, vol. 2, pages 531-547, XP002115176 Berlin, Germany, Springer-Verlag, ISBN: 3-540-64613-2
- TISTARELLI M ET AL: "DYNAMIC STEREO IN VISUAL NAVIGATION" PROC. OF THE COMPUTER SOC. CONF. ON COMPUTER VISION AND PATTERN RECOGNITION, LAHAINA, MAUI, HAWAII, JUNE 3 - 6, 1991, juin 1991 (1991-06), pages 186-193, XP000337361 IEEE
- THOMPSON W B ET AL: "Dynamic occlusion analysis in optical flow fields" IEEE TRANSACTIONS ON PATTERN ANALYSIS AND MACHINE INTELLIGENCE, JULY 1985, USA, vol. PAMI-7, no. 4, pages 374-383, XP002093068 ISSN 0162-8828
- TIRUMALAI A P ET AL: "DYNAMIC STEREO WITH SELF-CALIBRATION" IEEE TRANSACTIONS ON PATTERN ANALYSIS AND MACHINE INTELLIGENCE, vol. 14, no. 12, décembre 1992 (1992-12), pages 1184-1189, XP000332396
- CHIENCHUNG CHANG ET AL: "DEPTH FROM STEREO IMAGE FLOW" PROC. OF THE INTERN. CONF. ON SYSTEMS, MAN AND CYBERNETICS, CAMBRIDGE MA., USA, NOV. 14 - 17, 1989, vol. 2, novembre 1989 (1989-11), pages 586-591, XP000129842 IEEE

## Description

L'invention concerne un procédé de détection de la profondeur relative entre objets dans une image à partir d'un couple d'images.

Le contexte général de l'invention est l'estimation des profondeurs relatives d'objets vus dans des images issues de prises de vues différentes qu'il s'agisse d'images prises successivement dans le temps ou d'images prises sous des angles différents.

Ce procédé rentre dans le cadre de nombreuses applications qui nécessitent une analyse sémantique de séquences d'images. Notamment dans le domaine du multimédia, la quantité croissante de données audiovisuelles crée le besoin de nouvelles fonctionnalités telles que l'interactivité et l'intégration d'objets de nature différente. Le nouveau standard MPEG-4 permet de représenter une scène comme une composition d'objets, mais il ne spécifie pas de quelle manière se fait l'analyse de la scène.

Les techniques actuelles pertinentes dans le cadre de cette invention étudient les zones d'occultations apparaissant dans une séquence d'images. Ces techniques sont décrites dans un exemple d'occultation dans le paragraphe suivant.

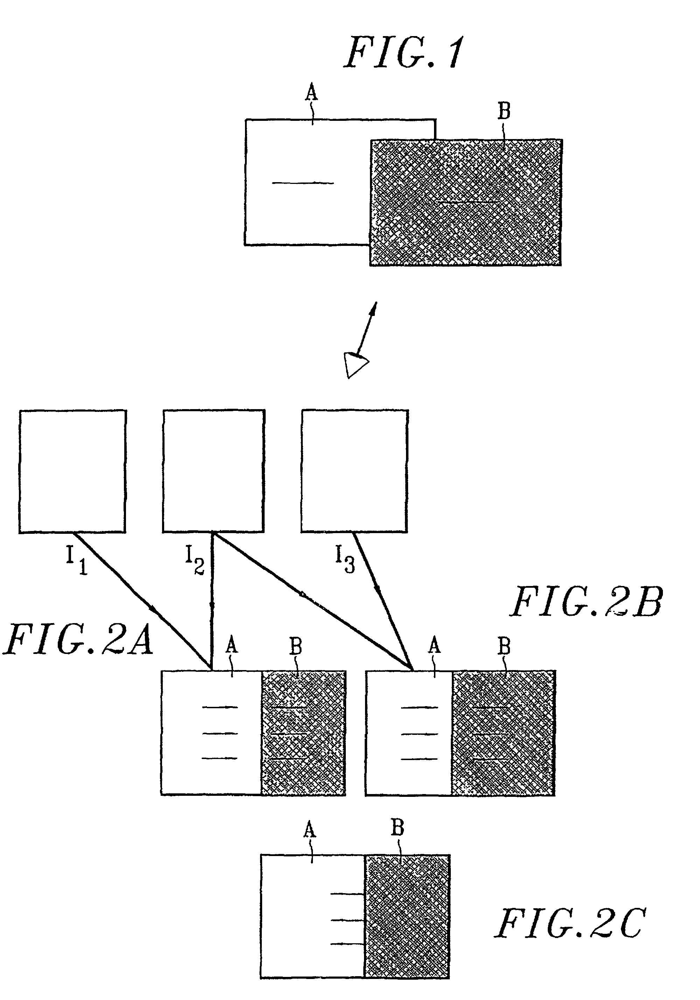

La figure 1 montre un exemple de situation donnant lieu à l'occultation. Un capteur, ici représenté par un oeil, voit deux objets A et B : un objet qui bouge vers la gauche B couvre un deuxième objet A qui bouge vers la droite.

En observant le mouvement, c'est-à-dire le déplacement des objets les uns par rapport aux autres, on se rend compte que dans un certain nombre de situations, un objet passe devant un autre.

La profondeur relative d'un objet par rapport à un autre est la profondeur par rapport à la vision que peut en avoir un observateur suivant la ligne qui va de l'oeil de l'observateur et qui traverse les objets de la scène.

Selon cet axe il y a des objets qui se trouvent dans des plans différents.

En fait, on ne cherche pas ici à évaluer la profondeur elle-même mais à savoir quel objet est devant par rapport à un autre objet de la scène. Cette information est nécessaire pour un certain nombre d'applications, en particulier pour le codage lorsque l'on veut faire de la prédiction d'images. Elle permet par exemple la reconstruction du fond d'une image.

En effet, on peut, en connaissant la profondeur relative, définir l'arrière plan d'une image et, éventuellement a) neutraliser cet arrière plan ou b) le rendre flou ou c) le remplacer par un autre ou d) compresser l'information avec très peu de bits et concentrer l'essentiel de l'information sur la partie qui est devant.

La détection de la profondeur relative entre objet a donc pour but d'apporter une meilleure compréhension de la scène observée.

En regardant la manière dont les objets bougent et en constatant qu'ils se trouvent derrière d'autres objets qui ne bougent pas ou qui ont un mouvement qui leur est propre, on peut ainsi définir l'organisation de la scène sans introduire de connaissance sémantique, c'est-à-dire sans être capable de reconnaître le type d'objet se trouvant dans la scène.

On sait simplement qu'il s'agit d'un ensemble de composantes homogènes en couleur et en texture, c'est-à-dire de zones homogènes que l'on rattache les unes aux autres parce qu'elle ont le même mouvement. Les zones homogènes sont rassemblées dans des entités qui ont des mouvements propres.

En observant les frontières de mouvement entre les différentes entités, on peut en déduire que l'entité E1 se trouve localement devant l'entité E2 qui elle-même se trouve devant l'entité E3.

En intégrant ces informations dans le temps à travers des images successivement on peut dégager une structure de profondeur relative.

On a donc besoin pour étudier la profondeur relative des régions de détecter leurs frontières de mouvement. Dans l'état de la technique, ces frontières sont obtenues grâce à une segmentation de mouvement.

On rappelle que la segmentation d'image est une technique connue consistant à transformer un ensemble de pixels en une image mosaïque où chaque particule connexe de la mosaïque a une homogénéité de couleur ou de texture (c'est-à-dire de luminance) ou de mouvement ou une combinaison de plusieurs critères. Dans le cas de la segmentation de mouvement, chaque mosaïque a une homogénéité de mouvement.

Or, pour étudier le déplacement d'une frontière de mouvement il est nécessaire de prendre en compte trois images de la scène en tant qu'information d'entrée.

En effet, les techniques existantes cherchent à détecter les frontières de mouvement, puis comparent le mouvement de ces frontières au mouvement des régions adjacentes pour conclure. Or, pour estimer le mouvement, il faut analyser deux images successives et pour estimer le mouvement de la frontière, il faut deux positions successives de la frontière, soit 3 images à analyser.

Cette technique est détaillée ci-dessous en regard des figures 2A, 2B, 2C.

En analysant deux images consécutives I1, I2 d'une séquence, on peut estimer le mouvement de la scène. Ce mouvement peut servir à segmenter la scène en objets A, B dont les mouvements sont indépendants. La figure 2A montre le mouvement des deux objets A, B ainsi que la segmentation.

Cette segmentation du mouvement ne contient pas assez d'informations pour déduire la profondeur relative des deux objets. L'analyse du mouvement d'un deuxième couple d'images I₂ et I₃, fournit l'information manquante : les deux segmentations permettent d'estimer le mouvement du contour (ou frontière) entre les deux objets.

La comparaison du mouvement du contour (frontière) avec le mouvement de la texture (luminance) des deux côtés permet de déduire la profondeur relative : la région qui a le même mouvement que le contour, correspond à l'objet occultant. Dans cet exemple les deux segmentations consécutives du mouvement, figure 2A et figure 2B, indiquent que le contour bouge vers la gauche, figure 2C. Comme ce mouvement est identique au mouvement de la région droite on en conclut que l'objet à droite occulte l'objet à gauche.

Dans la littérature on trouve différentes approches qui exploitent ce fait. Thompson, Mutch et Berzins (réf. D14 dans la suite) utilisent l'appariement de points caractéristiques pour obtenir un champs de vitesse éparse qui explique le mouvement entre deux images. Ensuite ils détectent des discontinuités dans ce champs de vitesse. L'analyse de deux champs de vitesse (calculés à partir de deux couples d'images) leur permet de déduire la profondeur relative.

Une deuxième approche est décrite par Darrell et Fleet (réf. D12 dans la suite). Cet approche segmente la scène en plans avec un mouvement cohérent utilisant exclusivement l'information de mouvement. L'évolution de ces plans permet de déterminer le mouvement des contours qui à son tour permet l'estimation de la profondeur relative.

On pourra aussi se reporter à l'état de la technique que constituent les document D1-D18 ci-dessous référencés en matière de techniques décrites et couramment utilisées pour le traitement d'images :
D1: S. Beucher. Segmentation d'Images et Morphologie Mathématique, Phd thesis, E.N.S. des Mines de Paris, 1990.
D2: J. Barron, D. Fleet and S. Beauchemin. Performance of optical flow techniques. International Journal of Computer Vision, 12(1) :43-77, 1994.
D3: K. M. Mutch and W. B. Thompson. Analysis of accretion and deletion at boundaries in dynamic scenes. IEEE Transactions on Pattern Analysis and Machine Intelligence, 7 :133-138, 1985.
D4: E. Decencière Ferrandière, C. de Fouquet and F. Meyer. Applications of kriging to image sequence coding. Accepted for publication in signal Processing : Image Communication, 1997.
D5: F. Hampel, E. Ronchetti, P. Rousseeuw, and W. Stahel. Robust Statistics - The approach Based on Influence Function. Wiley, 1986.
D6: P. Huber. Robust Statistics. John Wiley, New York, 1981.
D7: Peter Meer, Doron Mintz, Dong Yoon Kim, and Azriel Rosenfeld. Robust regression methods for computer vision. A review. International Journal of Computer Vision, 6(1) :59-70, April 1991.
D8: Nikhil R. Pal and Sankar K. Pal. A review on image segmentation techniques. Pattern Recognition, 26(9) :1277-1294, 1993.
D9: J. Y. A. Wang and E. H. Adelson. Representing moving images with layers. The IEEE Transactions on Image Processing Special Issue : Image Sequence compression, 3(5) :625-638, September 1994.
D10: G. Wolberg. Digital Image Warping. IEEE Computer Press, 1990.
D11: J. Cichosz and F. Meyer. Morphological multiscale image segmentation. In Work-shop on Image Analysis for Mulitmedia Interactive Services (WIAMIS'97), pages 161-166, Louvain-la-Neuve (Belgium), June 1997.
D12: Trevor Darrel and David Fleet. Second-order method for occlusion relationships in motion layers. Technical Report 314, MIT Media Lab Vismod, 1995.
D13: B. K. P. Horn and B. G. Schunck. Determining optical flow. Artificial Intelligence, 17 :185-203, 1981.
D14: W. B. Thompson, K. M. Mutch, and V. A. Berzins. Dynamic occlusion analysis in optical flow fields. IEEE Transactions on Pattern analysis and Machine Intelligence, 7 :374-383, 1985.
D15: Zhengyou Zhang. Parameter estimation techniques : A tutorial with application to conic fitting. Technical Report 2676, Institut National de Recherche en Informatique et en Automatique, Sophia-Antipolis Cedex, France, October 1995.
D16: P. Chauvet. Aide Mémoire de géostatique linéaire. Ecole des Mines de Paris, 1993.
D17: Michael J. Black and Allan D. Jepson. Estimating optical flow in segmented images using variable-order parametric models with local deformations. IEEE Trans. Pattern Analysis and Machine Intelligence, 18(10) :972-986, October 1996.
D18: L. Bergen and F. Meyer. Segmentation du mouvement des objets dans une scène. In Coresa 97, 1997.

Les inconvénients des techniques présentées dans le paragraphe précédent (documents D12, D14) sont les suivants :
- Ces techniques sont entièrement fondées sur le mouvement ce qui entraîne une localisation des frontières de mouvement peu précise.
- Ces techniques utilisent trois images (deux segmentations du mouvement) pour déterminer le mouvement des contours; les problèmes de manque de précision dans la localisation des frontières se propagent dans l'estimation du mouvement des contours et par conséquent dans la détection de la profondeur. De plus, ceci entraîne un retard supplémentaire à l'analyse.
- En outre, le domaine d'application de ces techniques est restreint aux cas où le mouvement est relativement important.

Le but de l'invention est la détection de la profondeur relative entre objets à partir d'un couple d'images n'ayant pas les inconvénients des techniques antérieures.

A cette fin, l'invention a pour objet un procédé qui, à partir d'un couple d'images issues de prises de vues différentes d'une même scène, est capable de détecter les frontières de mouvement de façon très précise et de préciser pour chaque frontière la profondeur relative de chaque région adjacente.

Dans toute la suite, on entendra par mouvement d'un point, le déplacement de ce point lorsque l'on passe d'une image à une autre, ces images étant issues de prises de vues différentes d'une scène, que ces prises de vues soient successives dans le temps ou simultanées, mais avec un angle différent par exemple.

L'invention a donc plus particulièrement pour objet un procédé de détection de la profondeur relative de deux régions voisines en mouvement relatif l'une par rapport à l'autre dans deux images issues de prises de vues différentes d'une scène, principalement caractérisé en ce qu'il comprend les étapes suivantes :
- une segmentation spatiale de l'une des images, appelée image de référence,
- une estimation locale du mouvement entre les deux images, dont le champ de vecteurs résultant est appelé mouvement local,
- une détermination des erreurs d'estimation de mouvement le long des frontières de mouvement, et
- une analyse de la localisation des erreurs d'estimation de mouvement le long des frontières de mouvement pour conclure qu'une région A se trouve devant une région B lorsque l'erreur d'estimation de mouvement le long de la frontière se trouve principalement localisée du côté B de cette frontière.

Selon une autre caractéristique, on procédera aprés les deux premières étapes du procédé à une étape de fusion des régions pour obtenir des régions de mouvement homogène.

De préférence la segmentation spatiale sera réalisée selon une méthode morphologique et plus particulièrement selon la méthode basée sur la ligne de partage des eaux.

D'autres caractéristiques de la présente invention portent sur différents modes de réalisation pour la détermination des erreurs d'estimation de mouvement le long des frontières de mouvement.

D'autres avantages et particularités de l'invention apparaîtront à la lecture de la description qui est faite et donnée à titre d'exemple non limitatif et en regard des dessins sur lesquels :
- la figure 1, illustre schématiquement le phénomène d'occultation,
- les figures 2A à 2C, illustrent schématiquement les étapes de traitement d'images selon l'art antérieur,
- les figures 3A à 3C, illustrent schématiquement les étapes de traitement d'images selon le procédé conforme à l'invention,
- la figure 4, représente des images schématiques résultant des différentes étapes de traitement conforme au procédé,
- les figures 5A et 5B, illustrent les différentes variantes de réalisation pour évaluer l'erreur d'estimation de mouvement le long des frontières de mouvement.

Le procédé selon l'invention peut être mis en oeuvre au moyen d'un programme chargé dans un micro-ordinateur, apte à mettre en oeuvre les différentes étapes qui vont être décrites dans la suite ou par un dispositif électronique conçu à cet effet.

Le micro-ordinateur (non représenté) pourra être relié à une ou deux caméras permettant d'obtenir les deux prises de vue différentes de la scène U, W qui sont utilisées en tant que données d'entrée dans la chaîne de traitement qui va suivre et se trouvent sous la forme de matrices de pixels après numérisation.

On pourrait bien entendu à la place disposer de matériel audiovisuel disposant d'une unité de traitement et d'images pré-enregistrées.

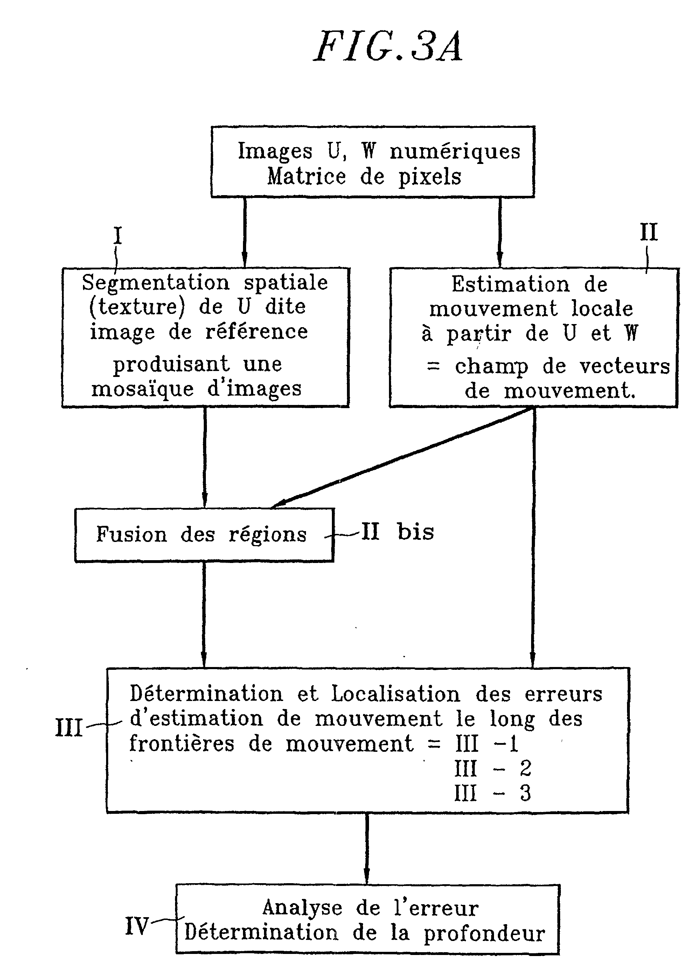

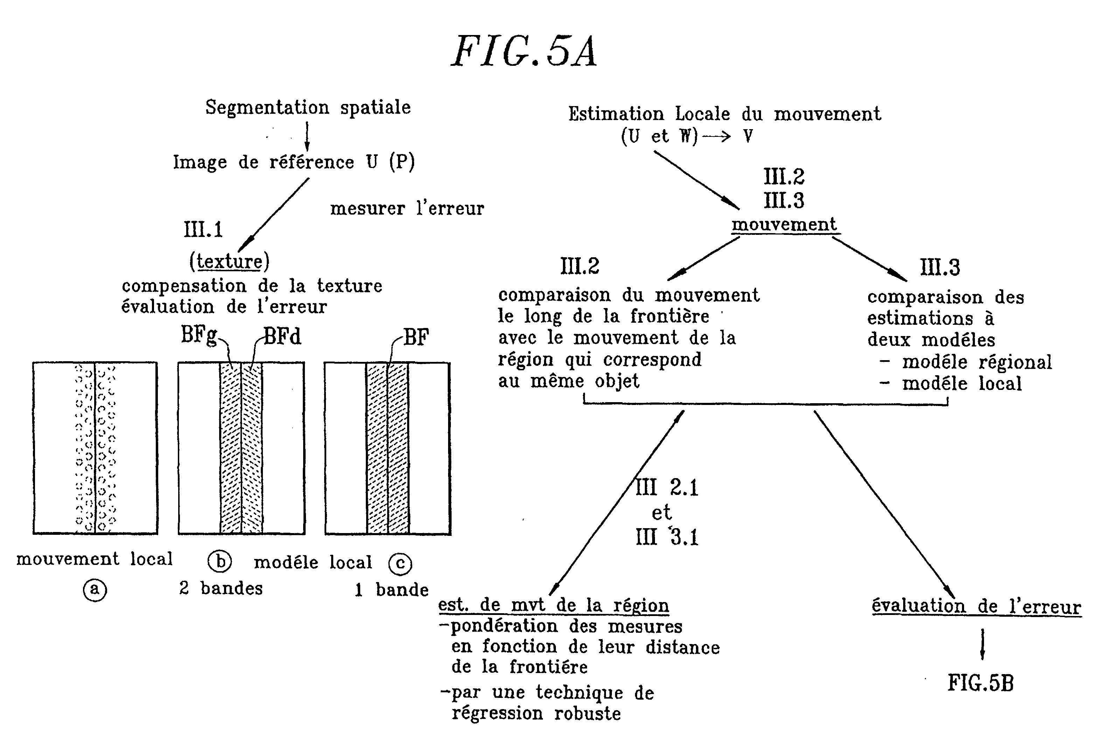

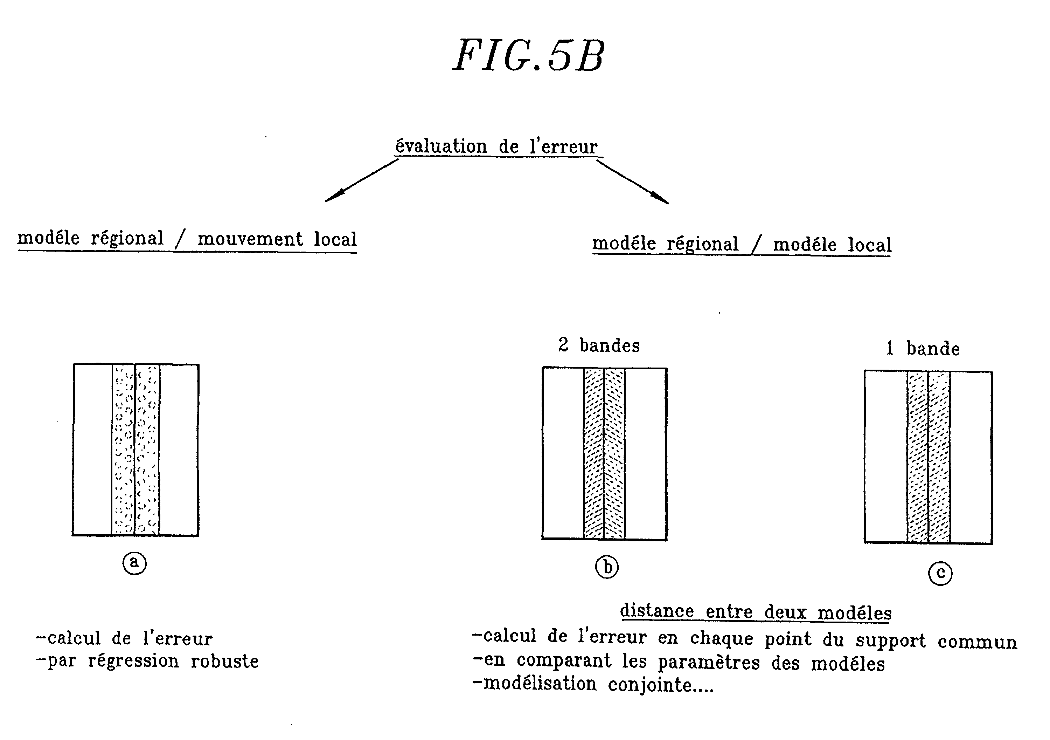

Pour mieux comprendre la suite on se reportera aux figures 3A-3C et 4 et 5A, 5B.

La figure 3A illustre la chaîne de traitements.

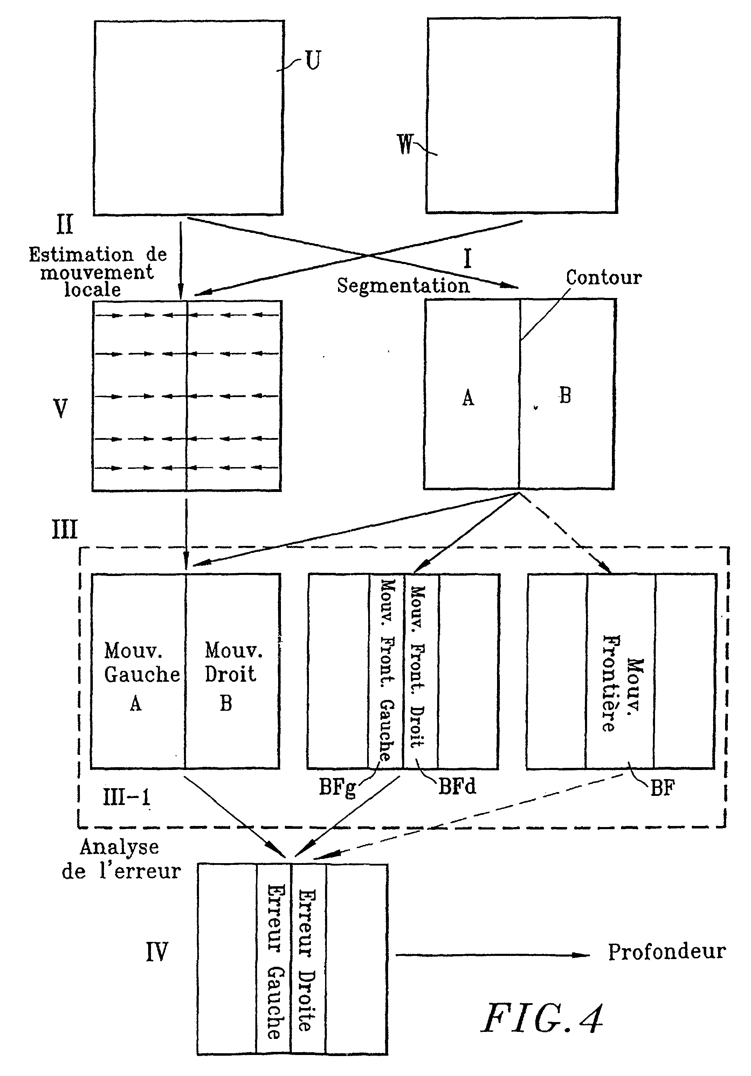

Cette chaîne comporte deux ensembles de traitement parallèles dont l'un I permet de réaliser une segmentation spatiale de l'une des images, par exemple l'image U, qui sera ensuite considérée comme l'image de référence, et l'autre II permet d'obtenir une estimation de mouvement en chaque pixel. Il s'agit d'une estimation locale du mouvement entre les deux images U,W, dont le champ vecteur résultant est appelé mouvement local (figure 4).

On obtient en sortie de ces traitements une partition P de l'image à partir de la segmentation spatiale et un champ V de vecteurs de mouvement expliquant le mouvement de chaque point image (pixel) à partir de l'estimation de mouvement.

Dans chaque région de la segmentation spatiale un modèle de mouvement est ajusté qui explique le mieux possible le mouvement global de la région, cela est détaillé dans la suite.

On réalise ensuite une étape de fusion des régions obtenues par la segmentation spatiale qui ont des mouvement similaires (étape IIbis). Ceci permet de faire apparaître les frontières de mouvement.

Comme l'estimation locale de mouvement produit une estimation erronée le long de la frontière de mouvement on cherche ensuite à déterminer l'erreur d'estimation pour la localiser et connaître ainsi le côté de la région occultée car cette erreur n'apparaît que du côté de la région occultée (étape III).

La connaissance de la région occultée conduit à la détection de la profondeur relative de deux régions en mouvement l'une par rapport à l'autre (étape IV).

On a besoin d'un critère pour déterminer (ou calculer l'erreur). Un premier critère choisi sera appelé "fidélité de compensation", un deuxième critère choisi sera appelé "disparité de mouvement".

Pour le critère "fidélité de compensation", on procède à une compensation de mouvement de la deuxième image ( de la texture), selon le champ de vecteurs V, afin de construire une estimation de l'image de référence et on étudie la répartition de l'erreur de compensation directement. On pourra alors procéder comme dans les modes de réalisation suivants (a, b, c) pour trouver dans quelle bande BFg ou BFd l'erreur est la plus importante.

Pour le critère "disparité de mouvement" on ajuste un modèle de mouvement à l'intérieur de chaque région de la partition P à partir du champ V de vecteurs de mouvement.

Le long de chaque frontière de mouvement on constitue une bande d'observation BF (ou selon une autre variante deux bandes BFg et BFd, de part et d'autre de la frontière).
a)- On compare le modèle régional avec le mouvement local ou,
b)- On estime un modèle de mouvement à partir du champ V dans la bande BF et on compare ce mouvement à celui des régions adjacentes. La région adjacente qui a le mouvement le plus semblable est celle qui se trouve devant l'autre ou,.
c)- On estime un modèle de mouvement à partir du champ V dans les deux bandes BFg et BFd. La région X pour laquelle l'estimation dans la bande BFx et l'estimation globale dans région X sont le mieux en accord est celle qui se trouve devant l'autre.

On va maintenant détailler chaque étape du procédé en regard des figures 3A-3C :
I. La segmentation spatiale permet de définir la composition de l'image par des régions homogènes en couleur, en texture en niveaux de gris, indépendamment de toute considération de mouvement. Il n'est pas nécessaire pour cela d'avoir deux images entrée comme dans le cas de la segmentation de mouvement.
   Pour s'affranchir des problèmes de bruit et pour avoir suffisamment d'information on prend en compte le mouvement à l'intérieur d'une fenêtre. Ainsi le vecteur de mouvement affecté au centre de la fenêtre ne représente pas le mouvement en ce point mais le mouvement dominant à l'intérieur de la fenêtre, ce qui provoque une forte imprécision, en particulier le long des frontières de mouvement.
   Les frontières que l'on obtient en segmentant le mouvement par les méthodes de l'art antérieur sont moins précises que les frontières obtenues en segmentant la luminance ou la couleur. Ceci est dû au fait que le champ de vitesse doit être estimé en tout points, alors que les niveaux de gris ou la couleur peuvent êtres directement vus en chaque point sans estimation préalable.
   La technique de segmentation spatiale permet d'obtenir des régions homogènes en texture par exemple et leur frontière de façon très précise à partir d'une image U.
   La méthode utilisée sera de préférence une méthode de segmentation morphologique et plus particulièrement une méthode basée sur le gradient d'image et la ligne de partage des eaux (watershed transform).
II. L'estimation de mouvement est réalisée au moyen d'une deuxième image W et de la première image U.
   Cette méthode permet d'obtenir un champ de vecteurs de mouvement V expliquant le mouvement de chaque point de l'image. On utilisera préférentiellement une méthode différentielle classique en soi pour réaliser cette estimation de mouvement. Les deux images sont pré-filtrées afin de préparer la différentiation et d'améliorer le rapport signal à bruit.
   Comme l'information de mouvement observable en chaque pixel est incomplète, car seule la composante de la vitesse normale aux contours d'iso-luminance est disponible, on intègre cette information incomplète de chaque pixel à travers l'ajustement d'un modèle de mouvement en chaque région. On peut choisir une représentation sous forme polynomiale. On peut également choisir une représentation sous forme nodale. Le choix du nombre de noeuds dépend de la complexité de la scène.
   Un nombre de noeuds fixes est choisi en fonction de la complexité du mouvement. La modélisation est faite en assignant à chacun de ces noeuds le mouvement qui, par interpolation, rend le mieux possible le mouvement observé en chaque pixel. La technique d'interpolation que l'on utilise est une technique classique qui s'appelle krigeage (D4, D16). La vitesse en chaque point d'une région est une fonction linéaire des vitesses aux noeuds fixes. On sait qu'un noeud produit une simple translation, trois noeuds produisent un modèle affiné et plus de noeuds donnent des modèles de plus en plus complexes.

La fusion de régions (étape IIbis) se fait de manière itérative : à chaque itération tous les couples de régions voisines sont candidats à la fusion. Au lieu d'essayer de comparer le mouvement dans l'espace des paramètres on calcule un nouveau jeu de paramètres pour chacun des couples et on évalue la qualité de la modélisation. Cette modélisation se fait par résolution d'un système linéaire surdéterminé qui est pondéré par les poids issus de l'estimation robuste initiale.

Les différentes étapes de la fusion de régions sont les suivantes :
1. on se fixe un critère de similitude de mouvement, basé sur la qualité de la modélisation pour tous les couples de régions (par exemple une valeur maximale à ne pas dépasser),
2. fusion du couple ayant le mouvement le plus similaire,
3. mise à jour des critères de similitude pour toutes les régions affectées par la fusion (ce sont tous les couples de régions qui contenaient une des régions fusionnées),
4. itération à partir de 2.

La fusion s'arrête quand le critère de similitude descend au-dessous d'une valeur pré-définie.

L'étape suivante III du procédé consiste ensuite, comme on l'a dit précédemment, à déterminer (ou évaluer) l'erreur d'estimation de mouvement.

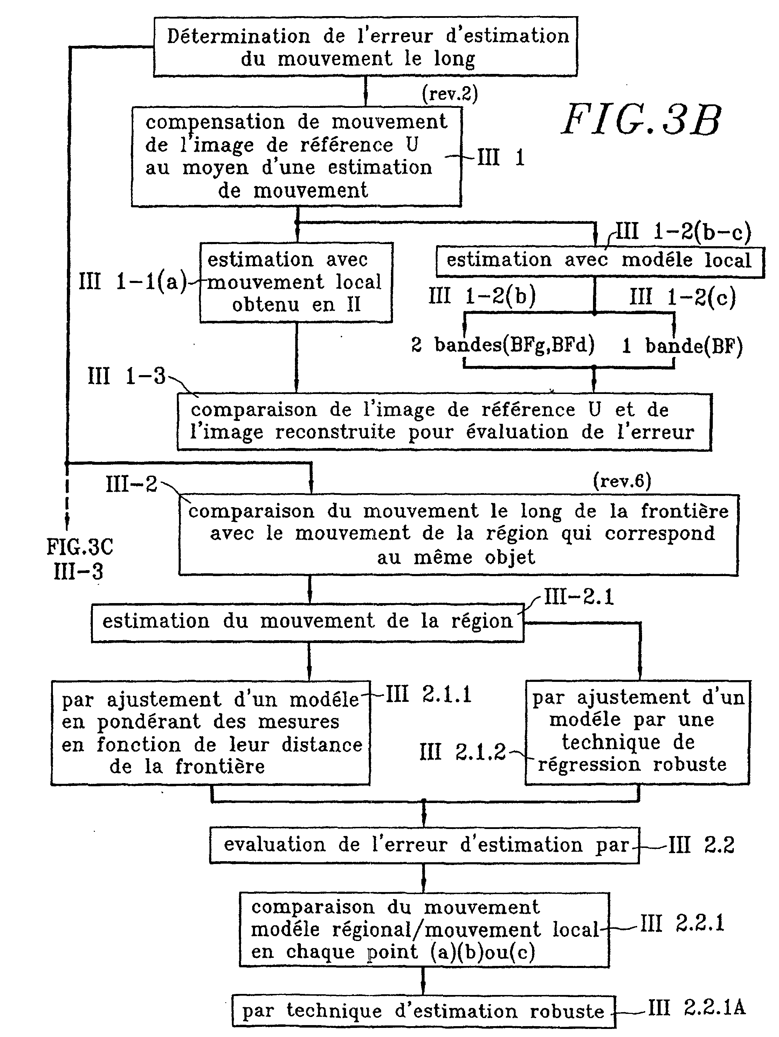

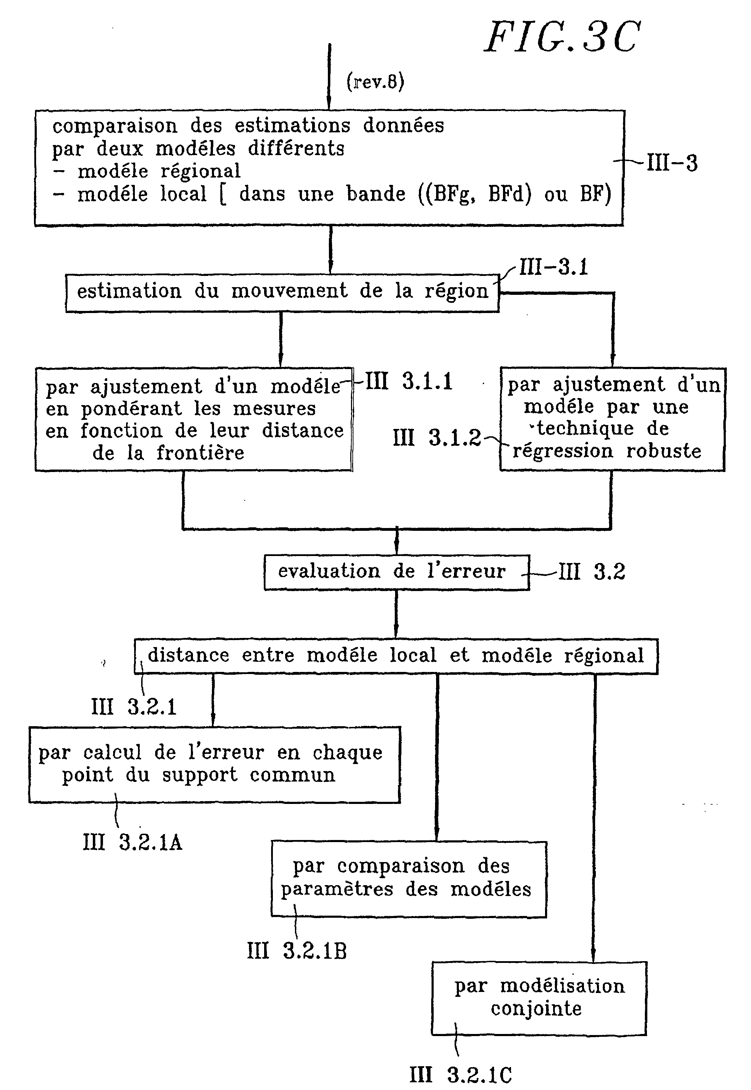

Plusieurs modes de réalisation sont proposés dans la suite pour réaliser cette détermination d'erreur d'estimation de mouvement. Ces différents modes apparaissent sur les figures 3B et 3C.

Un premier mode repose sur l'utilisation d'une méthode de compensation de mouvement, et deux autres reposent sur la disparité de mouvement.

Le premier mode de réalisation III.1 met en oeuvre le critère "fidélité de compensation". Pour cela l'erreur d'estimation de mouvement est obtenue en comparant l'image de référence P, c'est-à-dire l'image obtenue par la segmentation spatiale, et l'image obtenue par compensation du mouvement afin de reconstruire une estimation de l'image de référence à partir de la deuxième image.

Les techniques de compensation de mouvement sont des techniques bien connues, on pourra se reporter par exemple au livre portant la référence D10.

Selon une première variante d'exécution, le mouvement est le mouvement local (III-1.1(a) sur la figure 3B.

Selon une autre variante d'exécution, le mouvement est issu d'une modèle appelé modèle local ajusté dans une bande à l'intérieur de la région localisée le long de la frontière entre A et B (III.1.2 b et c). Dans b on considère deux bandes BFg, BFd, dans c on considère une seule bande BF.

On pourra prendre un seul modèle local estimé à l'intérieur d'une bande s'étendant de part et d'autre de la frontière (III-1.2c).

Le modèle utilisé pourra par exemple être un modèle polynomial. Il pourra également s'agir d'un modèle nodal tels que les modèles décrits dans la publication D4.

Selon un deuxième mode de réalisation III.2 mettant en oeuvre le critère de disparité de mouvement, l'erreur d'estimation de mouvement est calculée en comparant le mouvement issu d'un modèle appelé modèle régional représentant le mouvement de la région et le mouvement local (cf. figure 3B).

Le calcul d'erreur sera fait de manière préférentielle au moyen d'une technique d'estimation robuste.

L'utilisation d'une technique d'estimation robuste (M-estimateurs) est connue et une telle technique est décrite dans les documents, par exemple D5, D6 et D7.

On rappelle toutefois que les techniques d'estimation robuste appliquées à l'estimation de paramètres d'un modèle de mouvement permettent de détecter les vecteurs de mouvement aberrants et d' éliminer ou de réduire leur influence dans l'estimation : on obtient des paramètres qui correspondent à la majorité des vecteurs de vitesse observés. Les techniques robustes fournissent également l'erreur de modélisation en chaque point du support du modèle.

Un troisième mode de réalisation III.3 mettant en oeuvre le critère "disparité de mouvement" consiste à déterminer l'erreur d'estimation de mouvement dans chaque région en comparant les estimations de mouvement données par deux modèles différents :
- un modèle représentant le mouvement de la région, appelé modèle régional, et
- un modèle représentant le modèle d'une bande à l'intérieur de la région localisée le long de la frontière entre A et B, appelé modèle local.

Le modèle régional pourra être par exemple un modèle polynomial ou nodal. Des exemples de tels modèles sont donnés par exemple respectivement dans la publication D17 et dans la publication D4.

Le modèle local pourra par exemple être polynomial ou nodal. De la même façon, ces modèles pourront être par exemple tels que ceux qui sont publiés respectivement dans la publication D17 et dans le document D4.

Selon une variante d'exécution, un seul modèle local est estimé à l'intérieur d'une bande s'étendant de part et d'autre de la frontière.

Selon les deux derniers modes de réalisation qui ont été décrits le mouvement de la région pourrait être calculé par ajustement d'un modèle en pondérant les mesures en fonction de leur distance de la frontière entre A et B (III.2.1.1 ou III.3.1.1).

Une possibilité consiste à exclure les mesures venant d'une bande le long de la frontière (ce qui correspond à assigner un poids zéro à ces mesures pendant la modélisation).

Selon une autre variante d'exécution concernant ces deux modes de réalisation, le mouvement de la région peut être calculé par ajustement d'un modèle en utilisant une technique d'estimation robuste (III.2.2.1 ou III.3.1.2).

La mise en oeuvre d'une estimation robuste est à la portée de l'homme de métier, ces techniques étant connues. On pourra par ailleurs se reporter aux documents D5, D6 et D7 qui décrivent de telles techniques.

Dans le cadre du mode de réalisation utilisant deux modèles, l'erreur d'estimation de mouvement est calculée en comparant le mouvement issu du modèle régional et du modèle local en chaque point du support commun selon une première variante d'exécution. (III.2.2.1 ou II.3.2.1 A) .

Cette erreur d'estimation de mouvement peut aussi être calculée en comparant les paramètres du modèle régional et du modèle local (III.3.2.1.B). La comparaison de deux modèle dans l'espace des paramètres est connue en soi et facilement implémentable pour un homme de métier dans le cadre de cette variante d'exécution. On pourra par ailleurs se reporter au document D9 qui décrit une telle comparaison.

Selon une autre variante d'exécution, l'erreur d'estimation de mouvement est calculée en comparant le modèle régional et le modèle local par une modélisation conjointe (III.2.1.C). Une telle modélisation est connue en soi. On pourra se reporter à l'article D18 cité précédemment.

L'erreur du côté de la région occultée permet de détecter la profondeur relative étape IV.

Les mesures aberrantes qui sont dues à l'occultation sont situées autour de la frontière de mouvement.

On fait la somme de toutes les erreurs dans des bandes de part et d'autre des frontières de mouvement. On se fixe deux seuils t_{bas} et tₕₐᵤₜ pour avoir un ordre clair de profondeur. Un ordre clair existe si la somme des erreurs d'un côté (A) reste au-dessous de t_{bas} et si la somme des erreurs de l'autre côté (B) est au-dessus de tₕₐᵤₜ. Dans tous les autres cas on ne peut rien dire sur la profondeur. Le seuil bas admet une certaine erreur du côté occultant et le seuil haut indique l'erreur minimale nécessaire pour considérer une région occultée.

Sous cette forme, le détection n'est efficace que pour les cas les plus simples, Si, par exemple, le long du contour d'une région il n'y a qu'une petite partie où la composante du mouvement normal au contour est non nulle, les seuils indiqueront qu'il n'y a pas d'ordre bien défini. Ceci est dû au fait que le seuil haut ne sera pas franchi.

Il est donc prévu de partitionner la bande en plusieurs morceaux ou sous-bandes. On va alors appliquer un mécanisme de vote : seuls les couples qui indiquent clairement un ordre de profondeur contribuent à la détection de la profondeur.

En procédant ensuite aux comparaisons de la somme des valeurs obtenues pour chacune des sous-bandes aux seuils fixés on réalise une détermination plus robuste de l'ordre de profondeur car seules les sous-bandes qui répondent aux critères des seuils participent à la détermination de la profondeur.

Comme l'on a vu auparavant l'estimation de mouvement locale prend en compte le mouvement à l'intérieur d'une fenêtre. Si de plus la fenêtre contient une frontière de mouvement marquée par un fort gradient spatial, le mouvement apparent sera dominé par le mouvement de la frontière. Si l'on prend maintenant un point de chaque côté de la frontière: celui appartenant à la région occultante subit le même mouvement que la frontière, il sera donc estimé correctement, alors que le point dans la région occultée sera mal estimé. C'est ce qui produit une dissymétrie dans la répartition des erreurs d'estimation de mouvement entre les deux côtés des frontières de mouvement ayant un fort gradient spatial.

Le procédé conforme à l'invention tire parti de cette dissymétrie pour détecter la profondeur relative de deux régions en mouvement l'une par rapport à l'autre.

Cet effet est d'autant plus visible que le contraste de luminance ou chrominance entre régions adjacentes est plus fort.

D'autre part, l'effet est strictement localisé le long de la frontière. Il est donc important de détecter celle-ci avec précision, ce que permet la segmentation spatiale.

Enfin, le procédé ne demande que deux images en entrée par opposition aux méthodes traditionnelles décrites plus haut. Les frontières de mouvement qui sont considérées sont un sous-ensemble de l'ensemble des frontières spatiales.

## Revendications

1. Procédé de détection de la profondeur relative de deux régions voisines en mouvement relatif l'une par rapport à l'autre dans deux images issues de prises de vues différentes d'une scène, **caractérisé en ce qu'**il comprend les étapes suivantes :
- une segmentation spatiale de l'une des images, appelée image de référence,
- une estimation locale du mouvement entre les deux images, dont le champ de vecteurs résultant est appelé mouvement local,
- une détermination des erreurs d'estimation de mouvement le long des frontières de mouvement,
- une analyse de la localisation des erreurs d'estimation de mouvement le long des frontières de mouvement pour conclure qu'une région A se trouve devant une région B lorsque l'erreur d'estimation de mouvement le long de la frontière se trouve principalement localisée du côté B de cette frontière.

2. Procédé selon la revendication 1, selon lequel l'erreur d'estimation de mouvement est obtenue en comparant l'image de référence et l'image obtenue par compensation du mouvement pour reconstruire une estimation de l'image de référence à partir de la deuxième image.

3. Procédé selon les revendications 1 et 2, selon lequel le mouvement est le mouvement local.

4. Procédé selon les revendications 1 et 2, selon lequel le mouvement est issu d'un modèle, appelé modèle local, ajusté dans une bande à l'intérieur de la région localisée le long de la frontière entre A et B.

5. Procédé selon les revendications 1, 2 et 4, selon lequel un seul modèle local est estimé à l'intérieur d'une bande s'étendant de part et d'autre de la frontière.

6. Procédé selon la revendications 1, selon lequel l'erreur d'estimation de mouvement est calculée en comparant le mouvement *issu* d'un modèle, appelé modèle régional, représentant le mouvement de la région et le mouvement local.

7. Procédé selon les revendications 1 et 6, selon lequel l'erreur d'estimation de mouvement est calculée par une technique d'estimation robuste.

8. Procédé selon la revendication 1, selon lequel dans chaque région l'erreur d'estimation de mouvement est obtenue en comparant les estimations de mouvement données par deux modèles différents :
- un modèle représentant le mouvement de la région, appelé modèle régional,
- un modèle représentant le mouvement d'une bande à l'intérieur de la région localisée le long de la frontière entre A et B, appelé modèle local.

9. Procédé selon les revendications 1 et 8, selon lequel un seul modèle local est estimé à l'intérieur d'une bande s'étendant de part et d'autre de la frontière.

10. Procédé selon les revendications 1 et 6 ou 1 et 8, selon lequel le mouvement de la région est calculé par ajustement d'un modèle en pondérant les mesures en fonction de leur distance de la frontière entre A et B.

11. Procédé selon les revendications 1 et 6 ou 1 et 8, selon lequel le mouvement de la région est calculé par ajustement d'un modèle en utilisant une technique d'estimation robuste.

12. Procédé selon les revendications 1, 8 et 9, selon lequel l'erreur d'estimation de mouvement est calculée en comparant le mouvement issu du modèle régional et du modèle local en chaque point du support commun.

13. Procédé selon les revendications 1, 8 et 9, selon lequel l'erreur d'estimation de mouvement est calculée en comparant des paramètres du modèle régional et du modèle local.

14. Procédé selon les revendications 1, 8 et 9, selon lequel l'erreur d'estimation de mouvement est calculée en comparant le modèle régional et le modèle local par une modélisation conjointe.

15. Procédé selon l'une quelconque des revendications précédentes, dans lequel la segmentation se fait selon des méthodes morphologiques.

16. Procédé selon l'une quelconque des revendications précédentes, **caractérisé en ce qu'**il comporte une étape de fusion des régions qui ont un mouvement similaire.

17. Procédé selon l'une quelconque des revendications précédentes, **caractérisé en ce que** la profondeur relative est obtenue en comparant la somme des erreurs d'un côté (A) de la frontière à un premier seuil fixé, et en comparant la somme des erreurs de l'autre côté (B) de la frontière à un deuxième seuil.

18. Procédé selon l'une quelconque des revendications précédentes, **caractérisé en ce que** les deux images sont des images prises successivement dans le temps, et on appellera mouvement d'un point le déplacement de ce point dans le temps lorsqu'on passe d'une image à l'autre.

19. Procédé selon l'une quelconque des revendications précédentes, **caractérisé en ce que** les deux images sont prises sous des angles différentes, et on appellera mouvement d'un point le déplacement de ce point dans le plan de l'image lorsqu'on passe d'une image à l'autre.

## Patentansprüche

1. Verfahren zur Erkennung der relativen Tiefe von zwei angrenzenden gegenseitig zueinander in relativer Bewegung befindlichen Regionen in zwei Bildern, die aus verschiedenen Aufnahmen einer Szene hervorgehen, **dadurch gekennzeichnet, dass** es die nachstehenden Etappen aufweist:
- eine räumliche Segmentierung von einem der Bilder, das als das Bezugsbild bezeichnet wird,
- eine lokale Bewertung der Bewegung zwischen den beiden Bildern, wovon das sich ergebende Vektorfeld als die lokale Bewegung bezeichnet wird,
- eine Bestimmung von den Fehlern der Bewertung der Bewegung entlang den Bewegungsgrenzen,
- eine Analyse der Lokalisierung von den Fehlern der Bewertung der Bewegung entlang den Bewegungsgrenzen um festzustellen, dass sich eine Region A vor einer Region B befindet, wenn der Fehler der Bewertung der Bewegung entlang den Bewegungsgrenzen hauptsächlich an der Seite B von dieser Grenze lokalisiert ist.

2. Verfahren nach Anspruch 1, **dadurch gekennzeichnet dass** der Fehler der Bewertung der Bewegung durch den Vergleich des Bezugsbilds mit dem Bild erhalten wird, das durch den Ausgleich der Bewegung erhalten wird, um eine Bewertung des Bezugsbildes anhand des zweiten Bildes zu rekonstruieren.

3. Verfahren nach der Ansprüche 1 und 2, **dadurch gekennzeichnet dass** es sich bei der Bewegung um die lokale Bewegung handelt.

4. Verfahren nach der Ansprüche 1 und 2, **dadurch gekennzeichnet dass** die Bewegung aus einem Modell hervorgeht, dass als lokales Modell bezeichnet wird und das in einem Streifen innerhalb der lokalen Region entlang der Grenze zwischen A und B justiert ist.

5. Verfahren nach der Ansprüche 1, 2 und 4, **dadurch gekennzeichnet dass** ein einziges lokales Modell innerhalb eines Streifens bewertet wird, der sich auf beiden Seiten der Grenze erstreckt.

6. Verfahren nach Anspruch 1, **dadurch gekennzeichnet dass** der Fehler der Bewertung der Bewegung dadurch berechnet wird, dass die Bewegung, die aus einem Modell hervorgeht, das als regionales Modell bezeichnet wird und die Bewegung der Region darstellt, mit der lokalen Bewegung verglichen wird.

7. Verfahren nach der Ansprüche 1 und 6, **dadurch gekennzeichnet dass** der Fehler der Bewertung der Bewegung anhand einer robusten Bewertungstechnik berechnet wird.

8. Verfahren nach Anspruch 1, **dadurch gekennzeichnet dass** in jeder Region der Fehler der Bewertung der Bewegung erhalten wird, indem die Bewertungen der Bewegung verglichen werden, die von zwei verschiedenen Modellen gegeben werden:
- ein Modell, das die Bewegung der Region darstellt und das als regionales Modell bezeichnet wird,
- ein Modell, das die Bewegung eines Streifens innerhalb der lokalisierten Region entlang der Grenze zwischen A und B darstellt und das als lokales Modell bezeichnet wird.

9. Verfahren nach der Ansprüche 1 und 8, **dadurch gekennzeichnet dass** ein einziges lokales Modell innerhalb eines Streifens bewertet wird, der sich auf beiden Seiten der Grenze erstreckt.

10. Verfahren nach der Ansprüche 1 und 6, sowie 1 oder 8, **dadurch gekennzeichnet dass** die Bewegung der Region durch die Justierung eines Modells berechnet wird, indem die Messungen in Abhängigkeit von ihrem Abstand zur Grenze zwischen A und B bewertet werden.

11. Verfahren nach der Ansprüche 1 und 6, oder 1 und 8, **dadurch gekennzeichnet dass** die Bewegung der Region durch die Justierung eines Modells berechnet wird, indem eine robuste Bewertungstechnik eingesetzt wird.

12. Verfahren nach der Ansprüche 1, 8 und 9, **dadurch gekennzeichnet dass** der Fehler der Bewertung der Bewegung berechnet wird, indem die Bewegung aus dem regionalen Modell und aus dem lokalen Modell in jedem Punkt des gemeinsamen Trägers verglichen wird.

13. Verfahren nach der Ansprüche 1, 8 und 9, **dadurch gekennzeichnet dass** der Fehler der Bewertung der Bewegung berechnet wird, indem Parameter des regionalen Modells mit Parametern des lokalen Modells verglichen werden.

14. Verfahren nach der Ansprüche 1, 8 und 9, **dadurch gekennzeichnet dass** der Fehler der Bewertung der Bewegung berechnet wird, indem das regionale Modell und das lokale Modell anhand einer gemeinsamen Modellierung verglichen werden.

15. Verfahren nach einem der vorstehenden Ansprüche, **dadurch gekennzeichnet dass** die Segmentierung anhand von morphologischen Methoden ausgeführt wird.

16. Verfahren nach einem der vorstehenden Ansprüche, **dadurch gekennzeichnet dass** es eine Etappe zur Fusion der Regionen aufweist, die über eine ähnliche Bewegung verfügen.

17. Verfahren nach einem der vorstehenden Ansprüche, **dadurch gekennzeichnet dass** die relative Tiefe erhalten wird, indem die Summe der Fehler einer Seite (A) von der Grenze mit einem festgelegten ersten Schwellwert verglichen wird und indem die Summe der Fehler der anderen Seite (B) der Grenze mit einem zweiten Schwellwert verglichen wird.

18. Verfahren nach einem der vorstehenden Ansprüche, **dadurch gekennzeichnet dass** es sich bei den beiden Bildern um Bilder handelt, die zeitlich nacheinander aufgenommen sind, und wobei die Bewegung eines Punktes die Verschiebung dieses Punktes in der Zeit darstellt, wenn von einem Bild zum anderen übergegangen wird.

19. Verfahren nach einem der vorstehenden Ansprüche, **dadurch gekennzeichnet dass** die beiden Bilder unter verschiedenen Aufnahmewinkeln aufgenommen sind, und wobei die Bewegung eines Punktes die Verschiebung dieses Punktes in der Ebene des Bildes darstellt, wenn von einem Bild zum anderen übergegangen wird.

## Claims

1. Method of detection of the relative depth of two neighboring regions moving relative to each other in two images coming from different shots of a scene, **characterized in that** it comprises the following steps:
- a spatial segmentation of one of the images, termed the reference image,
- a local estimation of the movement between the two images, the resulting vector field being termed the local movement,
- a determination of the errors of estimate of movement along boundaries of movement,
- an analysis of the localization of errors of estimate of movement along boundaries of movement to conclude that a region A is situated in front of a region B when the error of estimate of movement along the boundary is principally localized on the B side of this boundary.

2. Method according to claim 1, according to which the error of estimate of movement is obtained by comparing the reference image and the image obtained by compensation of the movement to reconstruct an estimate of the reference image from the second image.

3. Method according to claims 1 and 2, according to which the movement is the local movement.

4. Method according to claims 1 and 2, according to which the movement comes from a model, termed local model, adjusted in a band within the region localized along the boundary between A and B.

5. Method according to claims 1, 2 and 4, according to which a single local model is estimated within a band extending on both sides of the boundary.

6. Method according to claim 1, according to which the error of estimate of movement is calculated by comparing the movement arising from a model, termed regional model, representing the movement of the region and the local movement.

7. Method according to claims 1 and 6, according to which the error of estimate of movement is calculated by a robust estimation technique.

8. Method according to claim 1, according to which in each region the error of estimate of movement is obtained by comparing the estimates of movement given by two different models:
- a model representing the movement of the region, termed regional model,
- a model representing the movement of a band within the region localized along the boundary between A and B, termed local model.

9. Method according to claims 1 and 8, according to which a single local model is estimated within a band extending on both sides of the boundary.

10. Method according to claims 1 and 6 or 1 and 8, according to which the movement of the region is calculated by adjustment of a model by weighting the measurements as a function of their distance from the boundary between A and B.

11. Method according to claims 1 and 6 or 1 and 8, according to which the movement of the region is calculated by adjustment of a model using a robust estimation technique.

12. Method according to claims 1, 8 and 9, according to which the error of estimate of movement is calculated by comparing the movement coming from the regional model and from the local model at each common support point.

13. Method according to claims 1, 8 and 9, according to which the error of estimate of movement is calculated by comparing parameters of the regional model and of the local model.

14. Method according to claims 1, 8 and 9, according to which the error of estimate of movement is calculated by comparing the regional model and the local model by conjoint modeling.

15. Method according to any one of the foregoing claims, in which the segmentation takes place according to morphologic methods.

16. Method according to any one of the foregoing claims, **characterized in that** it comprises a step of fusion of the regions which have a similar movement.

17. Method according to any one of the foregoing claims, **characterized in that** the relative depth is obtained by comparing the sum of errors on one side (A) of the boundary with a first fixed threshold, and by comparing the sum of errors on the other side (B) of the boundary with a second threshold.

18. Method according to any one of the foregoing claims, **characterized in that** the two images are images taken successively in time, and the displacement of a point in time when passing from one image to another will be termed the movement of this point.

19. Method according to any one of the foregoing claims, **characterized in that** the two images are taken at different angles, and the displacement of a point in the plane of the image when passing from one image to another will be termed the movement of this point.
